Europäisches Patentamt

(19) European Patent Office

Office européen des brevets

(11) Numéro de publication : **0 326 773 B1**

(12)                           FASCICULE DE BREVET EUROPEEN

(45) Date de publication du fascicule du brevet :
04.09.91 Bulletin 91/36

(21) Numéro de dépôt : **88403340.8**

(22) Date de dépôt : **28.12.88**

(51) Int. Cl.⁵ : **B60T 13/58, B60T 15/02**

---

(54) **Convertisseur bi-fluide, notamment pour circuit de freinage de véhicule semi-remorque.**

---

(30) Priorité : **27.01.88 FR 8800915**

(43) Date de publication de la demande :
**09.08.89 Bulletin 89/32**

(45) Mention de la délivrance du brevet :
**04.09.91 Bulletin 91/36**

(84) Etats contractants désignés :
**DE ES FR GB IT**

(56) Documents cités :
**DE-A- 1 908 710**
**DE-B- 1 755 953**
**FR-A- 1 560 958**
**FR-A- 2 592 689**
**GB-A- 1 224 084**

(73) Titulaire : **BENDIX EUROPE Services**
**Techniques S.A.**
**126 rue de Stalingrad**
**F-93700 Drancy (FR)**

(72) Inventeur : **Levrai, Roland**
**Bendix France 126 rue de Stalingrad**
**F-93700 Drancy (FR)**
Inventeur : **Pressacco, Pierre**
**Bendix France 126 rue de Stalingrad**
**F-93700 Drancy (FR)**

(74) Mandataire : **Lejet, Christian**
**Bendix Europe Service Techniques Service**
**Brevets 126 rue de Stalingrad**
**F-93700 Drancy (FR)**

## Description

L'invention concerne un convertisseur bi-fluide tel qu'un convertisseur hydropneumatique conçu notamment pour équiper le circuit de freinage d'un véhicule semi-remorque.

Certains véhicules tels que les véhicules semi-remorques sont équipés de deux circuits de freinage indépendants utilisant des fluides différents. Ainsi, le véhicule tracteur comprend fréquemment un circuit de freinage hydraulique simple ou double, alors que la remorque comprend un circuit de freinage pneumatique. Dans ces conditions, un convertisseur hydropneumatique est utilisé pour commander l'actionnement du circuit de freinage pneumatique de la remorque lorsque le circuit de freinage hydraulique du véhicule tracteur est actionné.

Le document FR-A-2.592.689 concerne un convertisseur bi-fluide conçu précisément pour assurer l'interface entre les circuits de freinage indépendants d'un véhicule tel qu'un semi-remorque. Dans ce convertisseur, un ou deux pistons montés en tandem sont sensibles à la pression régnant dans le premier circuit, par exemple hydraulique, pour déplacer vers l'avant un autre piston permettant d'actionner un clapet contrôlant la circulation d'un autre fluide, par exemple pneumatique, circulant dans le deuxième circuit.

Grâce à un tel convertisseur, on effectue une montée en pression du fluide contenu dans le deuxième circuit proportionnelle à la montée en pression du fluide contenu dans le premier circuit, le rapport des pressions dans les deux circuits étant voisin de 20, afin que l'intensité du freinage soit pratiquement la même sur le véhicule tracteur et sur la remorque. Cependant, la montée en pression dans le deuxième circuit intervient avec un certain retard par rapport à la montée en pression dans le premier circuit. Ce retard résulte à la fois de l'existence de jeux fonctionnels indispensables au fonctionnement du convertisseur et de la section relativement faible des pistons sur lesquels agit le premier fluide, imposé par la nécessité d'avoir en permanence un rapport des pressions dans les deux circuits voisins de 20, quelle que soit la valeur de la pression. Compte tenu de ce retard de la montée en pression dans le deuxième circuit par rapport à la montée en pression dans le premier circuit et étant donné que le rapport des pressions dans les deux circuits doit toujours être voisin de 20, la pression dans le deuxième circuit est en permanence légèrement en retard sur la pression dans le premier circuit.

Sur un véhicule semi-remorque, la prépondérance du freinage hydraulique sur le tracteur par rapport au freinage pneumatique sur la remorque ainsi obtenue peut s'avérer dangereuse. En effet, le freinage de la remorque étant inférieur à celui du tracteur, la remorque risque de se mettre en travers lorsque les conditions d'adhérence de la chaussée sont mauvaises.

L'invention a précisément pour objet un convertisseur bi-fluide perfectionné conçu de façon à assurer au contraire une prépondérance du freinage pneumatique de la remorque par rapport au freinage hydraulique du tracteur, tout en gardant un rapport de montée en pression voisin de 20 entre les deux circuits de fluide dont le convertisseur constitue l'interface.

Conformément à l'invention, ce résultat est obtenu au moyen d'un convertisseur bi-fluide comprenant un corps dans lequel sont montés coulissants un premier piston ayant une face arrière sur laquelle agit un premier fluide d'un premier circuit, et un deuxième piston apte à être déplacé vers l'avant par le premier piston, pour actionner un clapet contrôlant la circulation d'un deuxième fluide dans un deuxième circuit, caractérisé par le fait qu'un troisième piston est monté coulissant dans le corps et présente une face arrière sur laquelle agit également le premier fluide, un moyen élastique interposé entre le premier piston et le troisième piston appliquant ce dernier contre une butée arrière formée sur le premier piston lorsque le premier fluide n'est pas sous pression, et exerçant sur le premier piston une force orientée vers l'avant, lorsque le troisième piston est avancé vers une butée avant formée dans le corps et éloigné de ladite butée arrière, sous l'effet d'une montée en pression du premier fluide.

Dans cette définition de l'invention ainsi que dans la suite du texte, les mots "arrière" et "avant" désignent les parties du convertisseur tournées respectivement vers le premier circuit dans lequel circule généralement un fluide hydraulique et vers le deuxième circuit dans lequel circule généralement un fluide pneumatique.

Grâce à l'invention ainsi définie, la montée en pression dans le second circuit est plus rapide, puisque la section sur laquelle agit le premier fluide est alors augmentée de la section du troisième piston. De plus, après la période transitoire initiale, le troisième piston vient en butée contre la butée avant formée dans le corps du convertisseur et la pression dans le deuxième circuit résultant du seul déplacement du premier piston en fonction des variations de pression dans le premier circuit est augmentée en permanence d'une valeur constante, résultant de la force appliquée par le moyen élastique sur le premier piston. Ainsi, le rapport des pressions du premier et du deuxième circuits reste en permanence voisin de 20, mais la pression dans le deuxième circuit est à tout moment légèrement en avance sur la pression dans le premier circuit.

Dans un mode de réalisation préféré de l'invention, le troisième piston est un piston annulaire disposé coaxialement autour du premier piston et l'ensemble formé par le premier piston et le troisième piston est normalement maintenu dans une position arrière de repos par un organe de rappel.

Par ailleurs, lorsque le premier circuit est double, un quatrième piston est généralement monté coulissant dans le corps entre le premier piston et le deuxième piston et axialement aligné avec ces derniers, ce quatrième piston ayant une face arrière sur laquelle agit également le premier fluide contenu dans un autre premier circuit.

Cette dernière caractéristique est utilisée avantageusement dans une application privilégiée de l'invention, dans laquelle le premier circuit est un circuit hydraulique de freinage d'un tracteur, généralement formé de deux circuits séparés, et le deuxième circuit est un circuit pneumatique de freinage d'une remorque.

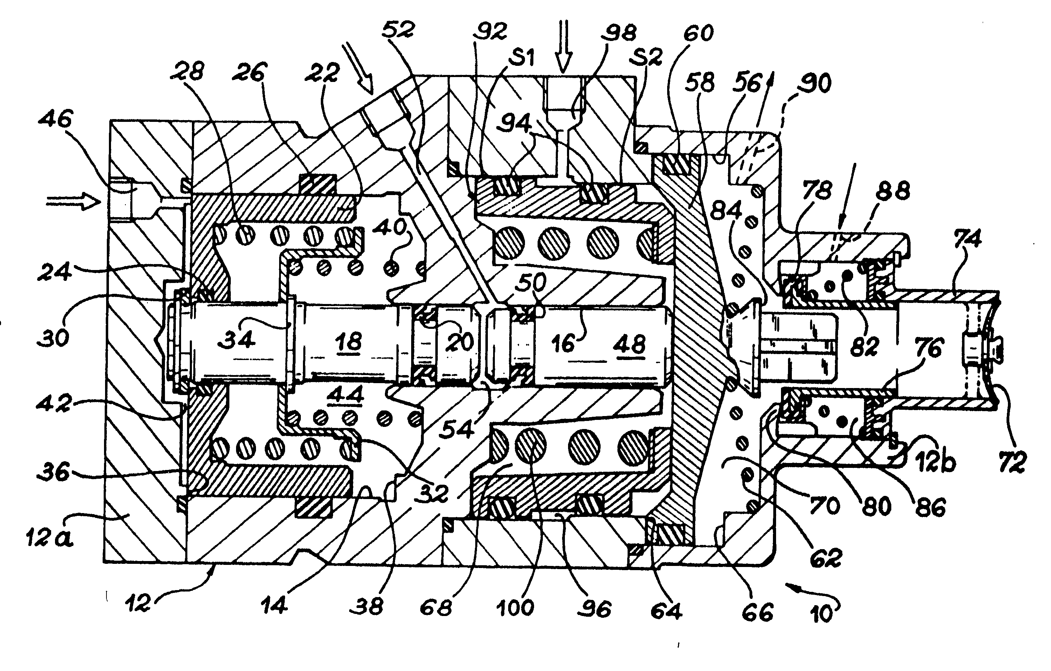

Un mode de réalisation préféré de l'invention va maintenant être décrit, à titre d'exemple nullement limitatif, en se référant au dessin annexé dans lequel la figure unique est une vue de côté, en coupe longitudinale, d'un convertisseur hydropneumatique conforme à l'invention.

La figure unique représente plus précisément un convertisseur hydropneumatique conçu pour assurer l'interface entre un double circuit de freinage hydraulique d'un véhicule tracteur et un circuit de freinage pneumatique d'une remorque, dans un véhicule du type semi-remorque.

Ce convertisseur, désigné de façon générale par la référence 10, comprend un corps 12 en plusieurs parties dans lequel sont formés successivement, de l'arrière vers l'avant, un alésage 14 de relativement grand diamètre et un alésage 16, de plus petit diamètre. L'alésage 14 est fermé vers l'arrière du convertisseur par un fond 12a du corps 12 et il présente un diamètre uniforme. L'alésage 16 est disposé coaxialement à l'alésage 14 dans lequel il débouche, et il présente également un diamètre uniforme.

Un premier piston 18, de diamètre approximativement uniforme et égal au diamètre de l'alésage 16 est monté coulissant de façon étanche, par sa partie avant, dans la partie arrière de l'alésage 16. L'étanchéité est assurée par un joint annulaire 20 reçu dans une gorge formée dans la partie avant du piston 18.

Conformément à l'invention, sur la partie arrière du piston 18 est monté coulissant un piston annulaire 22 qui est par ailleurs reçu de façon coulissante dans l'alésage 14. L'étanchéité entre les pistons 18 et 22 est assurée par un joint annulaire 24 reçu dans un gorge formée dans la périphérie intérieure du piston 22. Un joint d'étanchéité annulaire 26 reçu dans une gorge formée dans l'alésage 14 assure par ailleurs l'étanchéité entre le piston 22 et le corps 12 du convertisseur.

Un ressort de compression 28 est interposé entre les pistons 18 et 22, de façon à plaquer ce dernier contre une butée formée à l'extrémité arrière du piston 18 et constituée dans l'exemple représenté par une bague 30. De façon plus précise, le ressort 28 est un ressort hélicoïdal de compression centré sur l'axe commun aux pistons 18 et 22 et dont l'extrémité arrière prend appui sur ce dernier piston. L'extrémité avant du ressort 28 prend appui sur une coupelle 32 dont le bord périphérique intérieur est plaqué par le ressort 28 contre une butée avant formée sur le piston 18 et constitué dans l'exemple représenté par un circlip 34.

Les pistons 18 et 22 reliés par le ressort 28 forment ainsi un ensemble coulissant apte à se déplacer d'un seul bloc à l'intérieur des alésages 14 et 16. Le déplacement de cet ensemble est limité vers l'arrière par une butée annulaire 36 formée sur le fond 12a du corps du convertisseur et vers l'avant par une butée annulaire 38 formée dans le corps 12, et sur lesquelles peut venir en appui le piston annulaire 22.

Un moyen de rappel 40 constitué par un ressort hélicoïdal centré sur l'axe commun aux pistons 18 et 22 permet de maintenir au repos le piston 22 en appui contre la butée arrière 36 du corps du convertisseur. A cet effet, l'extrémité arrière du ressort 40 prend appui sur la coupelle 32 et l'extrémité avant de ce ressort prend appui sur la corps 12. Il est à noter que la force exercée par le ressort 40 est très inférieure à la force exercée par le ressort 28, de telle sorte que le ressort 40 permet d'appliquer le piston 22 contre la butée 36 tout en maintenant la coupelle 32 en contact avec le circlip 34.

L'ensemble formé par les pistons 18 et 22 délimite à l'intérieur de l'alésage 14 une chambre arrière 42 et une chambre avant 44. Un passage 46 formé dans le fond 12a du corps du convertisseur et débouchant dans la chambre arrière 42 permet de relier cette dernière à l'un des deux circuits hydrauliques de freinage du véhicule tracteur. La pression hydraulique régnant dans ce circuit est ainsi appliquée simultanément aux faces arrière du piston 18 et du piston 22. Un autre passage (non représenté) traversant le corps 12 relie la chambre avant 44 à l'atmosphère extérieure.

Dans la partie avant de l'alésage 16 est monté de façon coulissante un autre piston 48 présentant un diamètre approximativement uniforme et égal à celui du piston 18. Un joint d'étanchéité annulaire 50 reçu dans une gorge formée à la périphérie du piston 48 assure l'étanchéité entre ce dernier piston et le corps 12 du convertisseur.

Un passage 52, formé dans le corps du convertisseur, débouche dans une chambre 54 délimitée à l'intérieur de l'alésage 16 entre les pistons 18 et 48. Ce passage 52 est prévu pour être relié au second circuit hydraulique de freinage du véhicule tracteur. La face avant du piston 18 et la face arrière du piston 48 sont ainsi soumises à la pression régnant dans ce second circuit.

A son extrémité avant, l'alésage de petit diamètre 16 débouche dans un alésage coaxial et de plus grand diamètre 56 formé dans le corps 12 du convertisseur. Un piston 58 de commande du circuit pneumatique de freinage de la remorque est monté de façon coulissante dans cet alésage 56, coaxialement aux pistons 18, 22 et 48. Un joint d'étanchéité annulaire 60 reçu dans une gorge formée à la périphérie du piston 58 assure l'étanchéité entre ce dernier et le corps 12.

Un ressort de rappel 62, constitué par un ressort hélicoïdal de compression disposé coaxialement dans l'alésage 56, à l'avant du piston 58, est interposé entre ce dernier et le corps 12. Ce ressort 62 maintient au repos le piston 58 contre une butée arrière constituée par un épaulement 64 formé dans le corps 12. Le déplacement vers l'avant du piston 58 est également limité par une butée avant constituée par un épaulement 66 formé dans le corps 12.

Le piston 58 délimite à l'intérieur de l'alésage 56 une chambre arrière 68 et une chambre avant 70. A son extrémité avant, le corps 12 se termine par une partie tubulaire 12b apte à faire communiquer le chambre avant 70 avec l'extérieur au travers d'un filtre 72 monté dans une pièce tubulaire 74 fixée dans l'extrémité avant de la partie tubulaire 12b. La pièce tubulaire 74 et la partie tubulaire 12b supportent de façon coulissante, selon l'axe longitudinal commun aux pistons 18, 22, 48 et 58, un tube 76 portant à son extrémité arrière un clapet 78. Ce clapet 78 est normalement appliqué de façon étanche contre un siège de valve 80 formé à l'arrière de la partie tubulaire 12b par un ressort de compression 82 emprisonné entre le clapet 78 et la pièce tubulaire 74.

Dans sa partie avant, le piston 58 comporte un épaulement 84 formant un siège de valve de plus petit diamètre que le siège 80 et pouvant venir en appui contre le clapet 78 lorsque le piston 58 se déplace vers l'avant. Le siège de valve 84 est normalement éloigné du clapet 78 sous l'action du ressort 62, lorsque le convertisseur est au repos comme l'illustre la figure.

La chambre annulaire 86 formée entre le tube 76 et la partie tubulaire 12b du corps du convertisseur peut être reliée par un passage 88 formé dans cette partie 12b à une source de fluide pneumatique sous pression telle qu'un compresseur. Par ailleurs, un passage 90 formé dans le corps 12 du convertisseur et débouchant dans la chambre avant 70 permet de relier cette dernière au circuit de commande pneumatique des freins de la remorque.

Dans le mode de réalisation représenté, un autre piston annulaire 92 est monté coulissant de façon étanche dans la partie de l'alésage 56 située en arrière de l'épaulement 64. Deux joints d'étanchéité annulaires 94 reçus dans des gorges formées à la périphérie extérieure du piston 92 délimitent de façon étanche entre la périphérie extérieure de ce piston et le corps 12 une chambre annulaire 96 qui peut être reliée à une source de pression hydraulique, telle que celle du frein de secours et du frein de parc de la remorque, par un passage 98 formé dans le corps 12. Un ressort hélicoïdal de compression 100 apte à être comprimé par la pression hydraulique délivrée par cette source et agissant sur la différence des sections S1 et S2 du piston 92 est emprisonné entre le corps 12 et le piston 92 de telle sorte que, lorsque la pression chute dans la chambre 96, par exemple pour une mise en action du frein de parc, le piston 92 soit déplacé vers l'avant et entraîne dans son déplacement le piston 58. Un passage (non représenté) fait communiquer la chambre arrière 68, dans laquelle est logé le ressort 100, avec l'atmosphère extérieure.

Dans les conditions normales de fonctionnement du convertisseur qui vient d'être décrit, les différents éléments qui le constituent occupent les positions représentées sur la figure, lorsque les freins ne sont pas actionnés. En particulier, le fluide hydraulique sous pression admis dans la chambre 96 maintient le piston 92 dans une position arrière de repos à l'encontre de l'action du ressort 100. Par ailleurs, les chambres 42 et 54 n'étant soumises à aucune pression hydraulique de freinage, le piston annulaire 22 est maintenu contre la butée arrière 36 par le ressort 40 et les pistons 58 et 48 sont maintenus dans leur position arrière dans laquelle le piston 58 est en appui contre l'épaulement 64, sous l'action du ressort 62.

Dans ces conditions, le siège 84 est éloigné du clapet 78 et ce dernier est maintenu en appui contre le siège 80 par le ressort 82. Par conséquent, les freins de la remorque sont à la pression atmosphérique puisque la chambre 70 communique avec l'extérieur au travers du tube 76 de la pièce tubulaire 74.

Lorsque les freins du véhicule tracteur sont actionnés et que les deux circuits de freinage hydrauliques de celui-ci fonctionnent correctement, la pression s'élève simultanément dans les chambres 42 et 54. Dans un premier temps, les pistons 18 et 22 qui sont reliés par le ressort 28 se comportent comme un piston unique dont la face arrière soumise à la pression hydraulique du circuit de freinage du véhicule tracteur a une section égale à la somme des sections de ces deux pistons. Comme seule la face avant du piston 18 est soumise à la pression régnant dans la chambre 54, l'ensemble formé par les pistons 18 et 22 est alors soumis à une force dirigée vers l'avant et dont la valeur est proportionnelle à la pression appliquée dans la chambre 42 et à la section de la face arrière du piston 22. Etant donné que la section de la face arrière du piston 22 est très supérieure à la section de la face arrière des pistons 18 et 48, la force ainsi appliquée sur le piston 18 et, au travers du piston 48, sur le piston 58 est élevée et conduit à un déplacement très rapide du piston 58 vers la droite. Ce déplacement amène le siège de valve 84 en appui contre le clapet 78 et décolle ce dernier du siège de valve 80. La communication entre les freins de la remorque et l'atmosphère est ainsi interrompue et les freins de la remorque sont mis en communication avec la source de fluide pneumatique sous pression.

Lorsque le déplacement à l'unisson des pistons 18 et 22 provoqué par la montée en pression dans la chambre 42 amène le piston 22 en appui contre l'épaulement 38, le ressort 28 est légèrement comprimé et le piston 22 n'est plus en appui contre la butée constituée par la rondelle 30. Dans ces conditions, le piston 22 est immobilisé par rapport au corps 12 du convertisseur et le piston 18 pilote alors seul les déplacements des pistons 48 et 58, en conservant la force supplémentaire et approximativement constante qu'exerce sur lui vers l'avant le ressort 28.

Par conséquent, après la période transitoire qui suit immédiatement la montée en pression dans la chambre 42, le régime de fonctionnement du convertisseur permet de faire évoluer la pression de freinage dans le circuit pneumatique de la remorque dans un rapport voisin de 20 par rapport à la pression de freinage dans le circuit hydraulique du véhicule tracteur, en ajoutant en permanence à la pression de freinage de la remorque une valeur constante correspondant à la force exercée par le ressort 28 sur le piston 18. En donnant à la précontrainte du ressort 28 une valeur suffisante, on assure ainsi une prépondérance du freinage de la remorque par rapport au freinage du véhicule tracteur, tout en maintenant le rapport de montée en pression entre les circuits pneumatique et hydraulique voisin de 20.

Lorsque le circuit hydraulique raccordé sur le passage 52 est défaillant, le fonctionnement du convertisseur reste le même que celui qui vient d'être décrit. En revanche, lorsque c'est le circuit hydraulique raccordé sur le passage 46 qui est défaillant, seul le piston 48 se déplace vers la droite lors d'un actionnement des freins, de sorte que le ressort 28 n'agit plus sur le piston 58 et que la prépondérance du freinage pneumatique de la remorque n'est plus obtenue.

Enfin, lorsque le frein de secours ou de parc doit être actionné, il en résulte une chute de pression dans la chambre 96 qui conduit à l'actionnement immédiat des freins de la remorque sous l'action du ressort 100 qui déplace vers l'avant le piston 92 et le piston 58.

Bien entendu, l'invention n'est pas limitée au mode de réalisation qui vient d'être décrit à titre d'exemple, mais en couvre toutes les variantes. Ainsi, le piston 48 et le passage 52 peuvent être supprimés lorsque le circuit de freinage hydraulique du véhicule tracteur est un circuit simple. Le piston 92 et son ressort associé 100 qui assurent le freinage de sécurité ou de parc de la remorque peut également être supprimé dans certains cas. Enfin, il est à noter que si le convertisseur selon l'invention est particulièrement adapté pour assurer l'interface entre les circuits de freinage d'un véhicule tracteur et d'une remorque sur un véhicule semi-remorque, il peut aussi être utilisé dans d'autres domaines techniques, pour assurer l'interface entre deux circuits contenant des fluides de natures différentes, lorsque la montée en pression du fluide contenu dans l'un des circuits doit servir à assurer la montée en pression du fluide contenu dans l'autre circuit.

## Revendications

1. Convertisseur bi-fluide comprenant un corps (12) dans lequel sont montés coulissants un premier piston (18) ayant une face arrière sur laquelle agit un premier fluide d'un premier circuit, et un deuxième piston (58) apte à être déplacé vers l'avant par le premier piston, pour actionner un clapet (78) contrôlant la circulation d'un deuxième fluide dans un deuxième circuit, caractérisé par le fait qu'un troisième piston (22) est monté coulissant dans le corps et présente une face arrière sur laquelle agit également le premier fluide, un moyen élastique (28) interposé entre le premier piston (18) et le troisième piston (22) appliquant ce dernier contre un butée arrière (30) formée sur le premier piston lorsque le premier fluide n'est pas sous pression, et exerçant sur le premier piston une force orientée vers l'avant, lorsque le troisième piston est avancé vers une butée avant (38) formée dans le corps et éloigné de ladite butée arrière, sous l'effet d'une montée en pression du premier fluide.

2. Convertisseur selon la revendication 1, caractérisé par le fait que le troisième piston (22) est un piston annulaire disposé coaxialement autour du premier piston (18).

3. Convertisseur selon la revendication 2, caractérisé par le fait que le moyen élastique est un ressort de compression (28) dont une extrémité avant prend appui sur une coupelle (32) appliquée contre une butée avant (34) formée sur le premier piston (18) et dont une extrémité arrière prend appui sur le troisième piston (22).

4. Convertisseur selon l'une quelconque des revendications 1 à 3, caractérisé par le fait qu'un organe de rappel (40) déplace le premier piston (18) et le troisième piston (22) vers une position arrière de repos définie par une butée arrière (36) formée dans le corps (12).

5. Convertisseur selon l'une quelconque des revendications précédentes, caractérisé par le fait qu'il comprend un quatrième piston (48) monté coulissant dans le corps (12) entre le premier piston (18) et le deuxième piston (58) et coaxialement aligné avec ces derniers, ce quatrième piston ayant une face arrière sur laquelle agit le premier fluide contenu dans un autre premier circuit.

6. Convertisseur selon la revendications 3 et 4, caractérisé par le fait qu'une extrémité avant du premier piston (18) et le quatrième piston (48) coulissent de façon étanche dans un premier alésage (16) de diamètre uniforme formé dans le corps (12), une extrémité arrière du premier piston (18) traversant de façon étanche un alésage de même diamètre formé dans le troisième piston (22), ce dernier coulissant de façon étanche dans un deuxième alésage (14) de plus grand diamètre formé dans le corps (12) et dans lequel débouche le premier alésage (16), un passage faisant communiquer une partie du deuxième alésage située à l'avant de troisième piston avec l'atmosphère.

7. Convertisseur selon l'une quelconque des revendications précédentes, caractérisé par le fait que le premier circuit est un circuit hydraulique de freinage d'un tracteur et le deuxième circuit un circuit pneumatique de freinage d'une remorque.

8. Convertisseur selon la revendication 1, caractérisé par le fait qu'un déplacement du deuxième piston (58) vers l'avant interrompt une communication d'au moins un frein pneumatique de remorque avec l'atmosphère et met en communication ce frein avec une source de fluide pneumatique sous pression.

**Patentansprüche**

1. Bifluid-Umformer, mit einem Körper (12), in dem gleitend ein erster Kolben (18) mit einer Rückseite, auf die ein erstes Fluid eines ersten Kreises wirkt, und ein zweiter Kolben (58), der vom ersten Kolben nach vorne verschoben werden kann, um ein die Zirkulation eines zweiten Fluids in einem zweiten Kreis steuerndes Ventil (78) zu betätigen, angebracht sind, dadurch gekennzeichnet, daß im Körper ein dritter Kolben (22) gleitend angebracht ist, der eine Rückseite aufweist, auf die ebenfalls das erste Fluid wirkt, wobei zwischen dem ersten Kolben (18) und dem dritten Kolben (22) ein elastisches Mittel (28) eingesetzt ist, das diesen letzteren gegen einen am ersten Kolben ausgebildeten rückwärtigen Anschlag (30) drückt, wenn das erste Fluid nicht unter Druck steht, und auf den ersten Kolben eine nach vorne gerichtete Kraft ausübt, wenn der dritte Kolben unter der Wirkung eines Druckanstiegs im ersten Fluid gegen einen im Körper ausgebildeten vorderen Anschlag (38) vorgeschoben und vom rückwärtigen Anschlag entfernt wird.

2. Umformer gemäß Anspruch 1, dadurch gekennzeichnet, daß der dritte Kolben (22) ein um den ersten Kolben (18) koaxial angeordneter ringförmiger Kolben ist.

3. Umformer gemäß Anspruch 2, dadurch gekennzeichnet, daß das elastische Mittel eine Druckfeder (28) ist, deren vorderes Ende sich auf einem Teller (32) abstützt, der gegen einen am ersten Kolben (18) ausgebildeten vorderen Anschlag (34) drückt, und deren rückwärtiges Ende sich am dritten Kolben (22) abstützt.

4. Umformer gemäß einem der Ansprüche 1 bis 3, dadurch gekennzeichnet, daß ein Rückstellelement (40) den ersten Kolben (18) und den dritten Kolben (22) in eine durch einen im Körper (12) ausgebildeten rückwärtigen Anschlag (36) definierte rückwärtige Ruheposition verschiebt.

5. Umformer gemäß einem der vorangehenden Ansprüche, dadurch gekennzeichnet, daß er einen vierten Kolben (48) umfaßt, der im Körper (12) zwischen dem ersten Kolben (18) und dem zweiten Kolben (58) gleitend angebracht ist und zu diesen letzteren koaxial ausgerichtet ist, wobei dieser vierte Kolben eine Rückseite besitzt, auf die das in einem anderen ersten Kreis enthaltene erste Fluid wirkt.

6. Umformer gemäß den Ansprüchen 3 und 4, dadurch gekennzeichnet, daß ein vorderes Ende des ersten Kolbens (18) und der vierte Kolben (48) auf dichte Weise in einer im Körper (12) ausgebildeten ersten Bohrung (16) mit gleichmäßigem Durchmesser gleiten, wobei ein rückwärtiges Ende des ersten Kolbens (18) auf dichte Weise eine im dritten Kolben (22) ausgebildete Bohrung mit gleichem Durchmesser durchsetzt, wobei der dritte Kolben auf dichte Weise in einer im Körper (12) ausgebildeten zweiten Bohrung (14) mit größerem Durchmesser gleitet, in die die erste Bohrung (16) mündet, wobei ein Durchlaß einen am vorderen Bereich des dritten Kolbens befindlichen Teil der zweiten Bohrung mit der Atmosphäre verbindet.

7. Umformer gemäß einem der vorangehenden Ansprüche, dadurch gekennzeichnet, daß der erste Kreis ein Hydraulikbremskreis einer Zugmaschine und der zweite Kreis ein Druckluftbremskreis eines Anhängers ist.

8. Umformer gemäß Anspruch 7, dadurch gekennzeichnet, daß eine Verschiebung des zweiten Kolbens (58) nach vorne eine Verbindung wenigstens einer Anhänger-Druckluftbremse mit der Atmosphäre unterbricht und diese Bremse mit einer Quelle eines unter Druck stehenden Druckluft-Fluids verbindet.

**Claims**

1. Bi-fluidic converter comprising a body (12) in which are slidably mounted a first piston (18) having a rear face acted on by a first fluid of a first circuit, and a second piston (58) adapted to be moved forwards by the first piston to operate a valve (78) controlling the circulation of a second fluid in a second circuit, characterized by the fact that a third piston (22) is slideably mounted in the body and has a rear face likewise acted on by the first fluid, a resilient means (28) interposed between the first piston (18) and the third piston (22) applying the latter against a rear stop (30) formed on the first piston when the first fluid is not under pressure and exerting on the first piston a forwardly directed force when the third piston is moved forwards towards a front stop (38) formed in the body and is moved away from said rear stop, through the action of a rise in pressure of the first fluid.

2. Converter according to Claim 1, characterized by the fact that the third piston (22) is an annular piston disposed coaxially around the first piston (18).

3. Converter according to Claim 2, characterized by the fact that the resilient means is a compression spring (28) of which a front end bears against a cup (32) applied against a front stop (34) formed on the first piston (18), and of which a rear end bears against the third piston (22).

4. Converter according to any one of Claims 1 to 3, characterized by the fact that a return means (40) moves the first piston (18) and the third piston (22) to a rear position of rest defined by a rear stop (36) formed in the body (12).

5. Converter according to any one of the preceding claims, characterized by the fact that it includes a fourth piston (48) slideably mounted in the body (12) between the first piston (18) and the second piston (58) and coaxially aligned with said first and second pistons, this fourth piston having a rear face on which the first fluid contained in another first circuit acts.

6. Converter according to Claims 3 and 4, characterized by the fact that a front end of the first piston (18) and the fourth piston (48) slide leaktightly in a first bore (16) of uniform diameter formed in the body (12), a rear end of the first piston (18) passing leaktightly through a bore of the same diameter formed in the third piston (22), the latter sliding leaktightly in a second bore (14) of larger diameter formed in the body (12) and into which the first bore (16) leads, and a passage bringing a portion of the second bore situated in front of the third piston into communication with the atmosphere.

7. Converter according to any one of the preceding claims, characterized by the fact that the first circuit is a hydraulic brake circuit of a tractor and the second circuit is a pneumatic brake circuit of a trailer.

8. Converter according to Claim 7, characterized by the fact that a movement of the second piston (58) in the forward direction interrupts communication of at least one pneumatic trailer brake with the atmosphere and brings said brake into communication with a source of pressurized pneumatic fluid.

EP 0 326 773 B1